# EUROPEAN PATENT APPLICATION

(11) **EP 2 221 526 A2**
(43) Date of publication of application: **25.08.2010**
(21) Application number: 09011126.1
(22) Date of filing: 31.08.2009
(51) Int. Cl.: F21L 4/00, F21V 31/00, F21W 131/10, F21W 131/109

(54) **Mobile illuminating lamp usable on water as well as on land**

(30) Priority: 18.02.2009 CN 200910037243
(71) Applicant: Liu, Yunzhao, Nantou Zhongshan Guangdong 528427 (CN)
(72) Inventor: Liu, Yunzhao, Nantou Zhongshan Guangdong 528427 (CN)
(74) Representative: Pereira Toña, Maria Irache

(57) **Abstract**

A mobile lamp includes a body (1), and a waterproof lamp cover (2); the body (1) has a shining component on a front end, and a joining member is joined on an outer side of the front end of the body (1); brightness of the lamp can be adjusted; the waterproof lamp cover (2) is threadedly joined on the joining member on the front end of the body; the waterproof lamp cover (2) is pervious to light, hollow and filled with air, and it has a light reflecting screen (23) on a front end thereof; the mobile lamp can float on water owing to the waterproof lamp cover (2); therefore, the lamp can help fishers attract fishes, and it can flash on and off repeatedly to help a rescue team to locate a person having fallen into water besides being used on land.

## Description

### BACKGROUND OF THE INVENTION

### 1. Field of the invention

The present invention relates to a mobile illuminating lamp usable on water as well as on land, more particularly one, which can float on water to help fishers attract fishes, and can give out SOS signals so as to help a rescue team to locate a person having fallen into water.

### 2. Brief Description of the Prior Art

A common illuminating lamp structure includes a body, a shining component on a front end of the body, batteries held in the body, a lamp cover, and a bottom cover; the bottom cover is joined on the body to prevent the batteries from falling out; a switch is fitted on the body to control electric current from the batteries to the shining component; the lamp cover is joined on the body to protect the shining component.

Ordinary illuminating lamps can serve single purpose. In the light of the fact that multifunctional products can be more economical to use, and liked by more people, and single-functional products don't have as much attraction as multifunctional ones, especially for those people who like to buy and use modern things, the present invention is aimed to provide a mobile illuminating lamp usable on water as well as on land to meet more people's needs.

### SUMMARY OF THE INVENTION

A mobile illuminating lamp in accordance with an embodiment of the present invention consists of a body, and a waterproof lamp cover. The body has a shining component on a front end, and a joining member is joined on the front end of the body; the brightness of the shining component can be adjusted according to the user's need. The waterproof lamp cover is threadedly joined on the body through the joining member; the lamp cover is pervious to light, hollow and filled with air, and it has a relatively large size as compared with the body; a light reflecting screen is positioned in a front end of the lamp cover. The mobile lamp can float on water owing to the waterproof lamp cover, and therefore can be used on water as well as on land. Therefore, the mobile illuminating lamp can help the fishers attract fishes. Furthermore, the mobile illuminating lamp can flash on and off repeatedly to help a rescue team to locate a person having fallen into water, serving as an SOS signal giving device.

### BRIEF DESCRIPTION OF THE DRAWINGS

The present invention will be better understood by referring to the accompanying drawings, wherein:
Fig. 1 is a front view of the present invention,
Fig. 2 is a sectional view of the present invention,
Fig. 3 is a view of the present invention being in use (1),
Fig. 4 is a view of the present invention being in use (2),
Fig. 5 is a view of the present invention being in use (3),
Fig. 6 is a view of the present invention being in use (4),
Fig. 7 is a view of the present invention being in use (5).

### DETAILED DESCRIPTION OF THE PREFERRED EMBODIMENTS

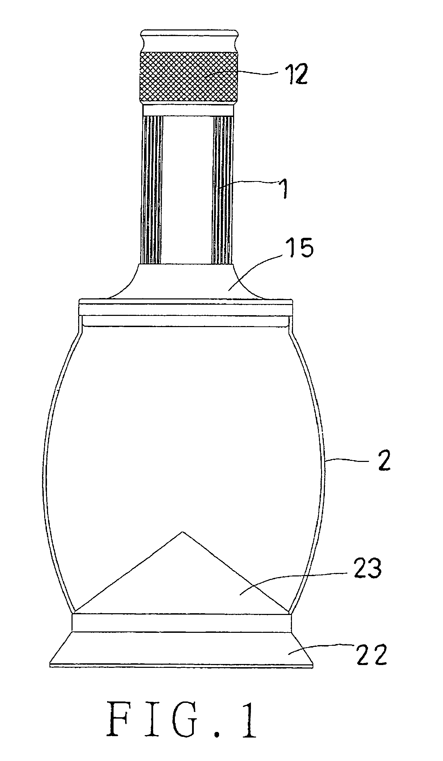

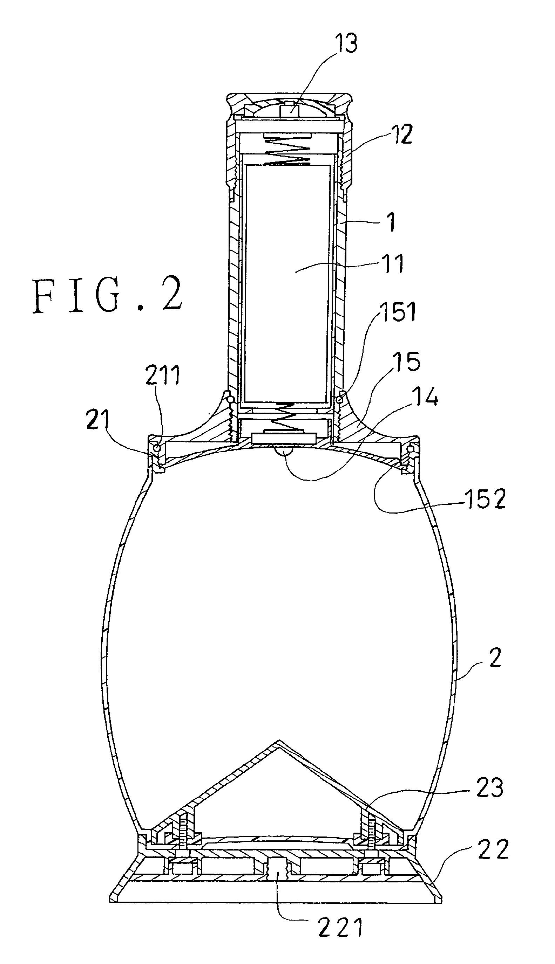

Referring to Figs. 1 and 2, a preferred embodiment of a mobile illuminating lamp of the present invention consists of:
a body 1; the body 1 contains batteries 11 therein; the body 1 has a rear cover 12 on a rear end thereof, which prevents the batteries 11 from falling out; the body 1 has a switch 13, which is joined on the rear cover 12; a shining component 14 is positioned on a front end of the body 1; a joining member 15 is joined on an outer side of the front end of the body 1, which has a threaded portion 152 on an outer side thereof; a water leakage-prevention ring 151 is interposed between the body 1 and the joining member 15; and
a waterproof lamp cover 2, which is hollow and pervious to light, and is filled with air; the lamp cover 2 has a relatively large size as compared with the body 1; the waterproof lamp cover 2 has a threaded portion 21, and it is joined on the body 1 with the threaded portion 21 being threadedly joined on the threaded portion 152 of the joining member 15; a water leakage-prevention ring 211 is interposed between the threaded portions 21 and 152; the waterproof lamp cover 2 has a front cover 22 on a front end thereof, and a light reflecting screen 23 is joined on an inner side of the front cover 22; the front cover 22 further has a threaded hole 221 on an outer side thereof.

The mobile illuminating lamp of the present invention can serve as an ordinary lamp; in use, the shining component 14 will be powered with the batteries 11 to start shining when the switch 13 is moved to an "ON" position; thus, light emitted from the shining component 14 will be reflected to travel through the waterproof lamp cover 2 by the light reflecting screen 23.

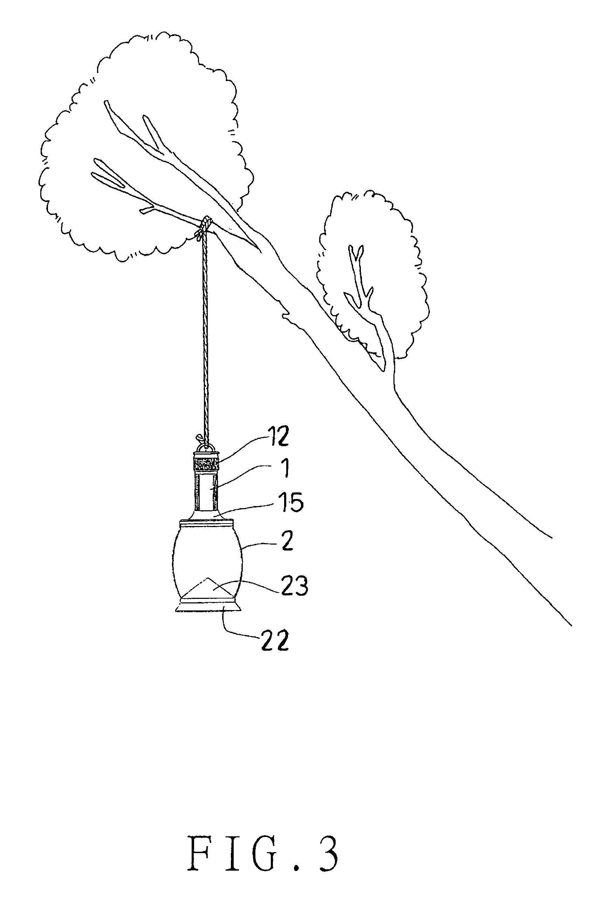

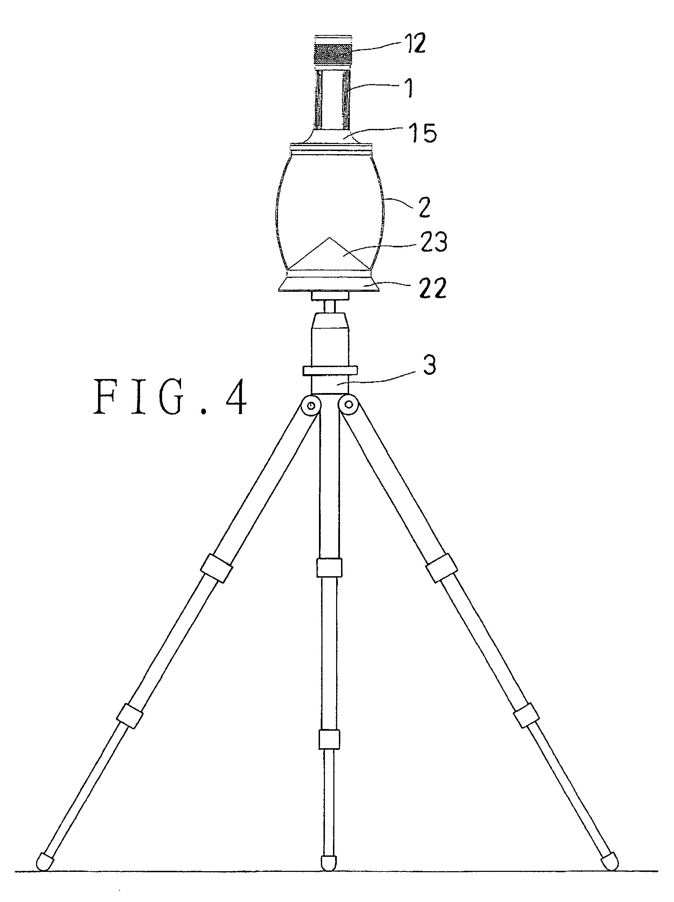

The mobile illuminating lamp can be used outdoors. Referring to Fig. 3, the mobile illuminating lamp is hung on a tree to provide illumination. A stand 3 is threadedly joined to the threaded hole 221; thus, the mobile illuminating lamp of the present invention can be steadily supported on the ground with the stand 3 to provide illumination, as shown in Fig. 4.

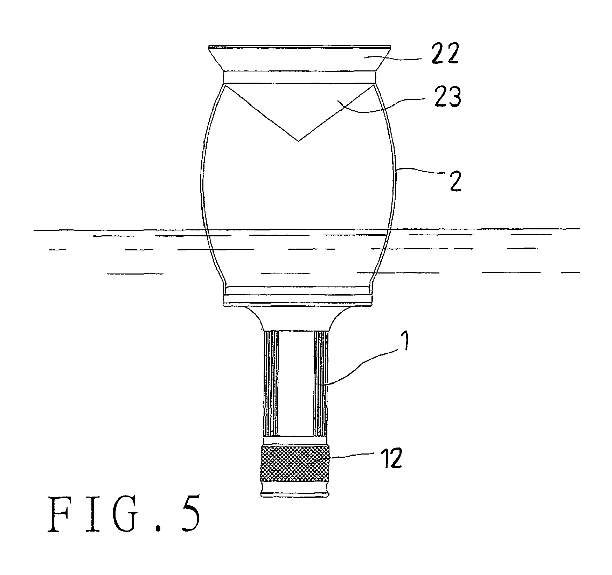

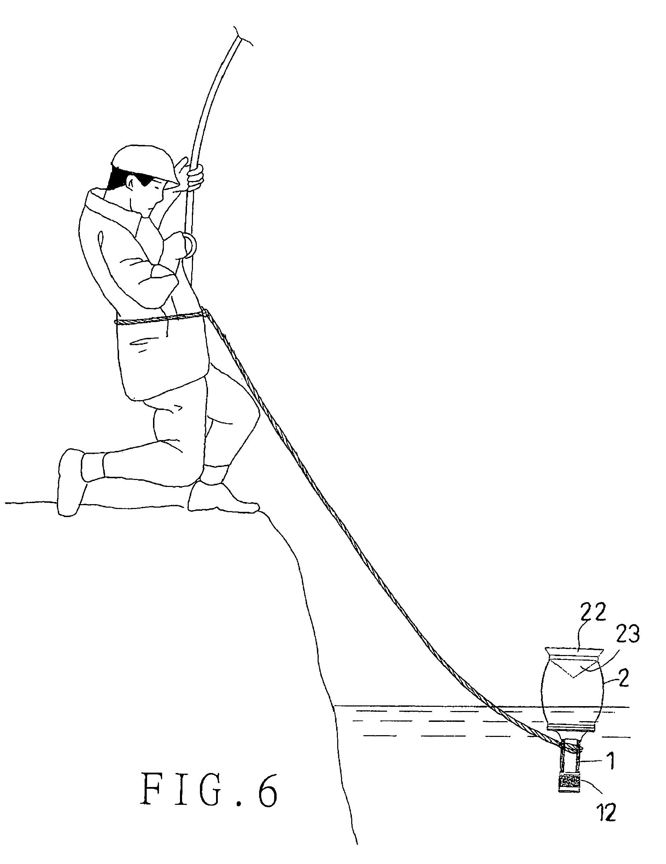

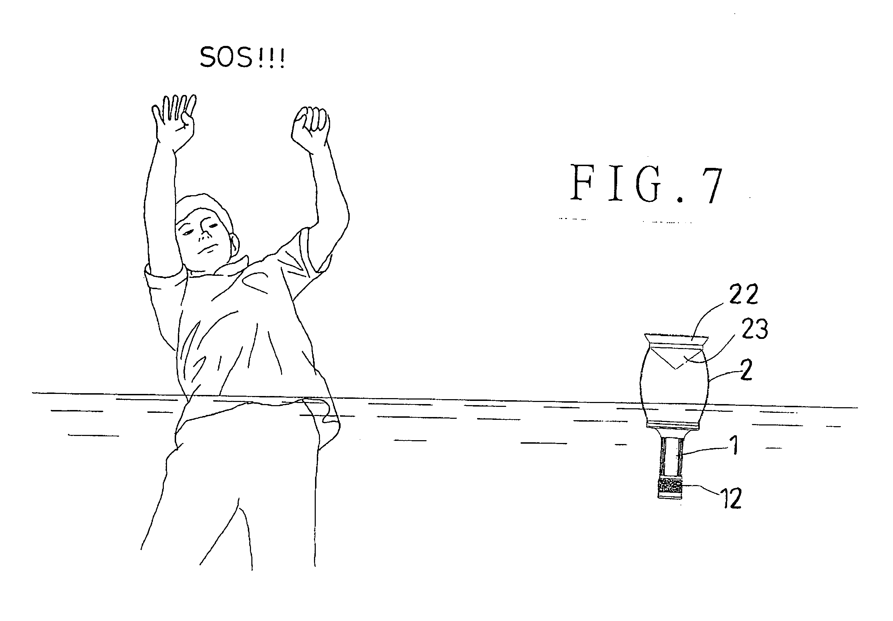

Referring to Fig. 5, because the waterproof lamp cover 2 is hollow and watertight, and has a relatively large size, the mobile illuminating lamp can float on water to provide illumination. Therefore, the lamp can float on water and shine to provide illumination and help the fishers attract fishes when a person is fishing, as shown in Fig. 6. The mobile illuminating lamp of the present invention further can flash on and off repeatedly so as to serve as an SOS signal giving device; when a person falls into water in the dark, the mobile illuminating lamp can give out light to indicate the position of the person so that the rescue team can easily locate the person having fallen into water, as shown in Fig. 7.

From the above description, it can be seen that the mobile illuminating lamp of the present invention can float on water and shine to help fishers attract fishes or help a rescue team locate a person having fallen into water besides providing illumination on land; in other words, the present invention is more practical and convenient to use than the currently existing single-functional lamps.

## Claims

1. A mobile illuminating lamp usable on water as well as on land, comprising
a body; the body having a shining component on a front end thereof; the body having a joining member joined on an outer side of the front end thereof; and
a waterproof lamp cover joined on the body; the waterproof lamp cover being pervious to light; the waterproof lamp cover being hollow and filled with air.

2. The mobile illuminating lamp usable on water as well as on land as claimed in claim 1, wherein the joining member and the waterproof lamp cover each have a threaded portion, and they are threadedly joined together at the threaded portions thereof.

3. The mobile illuminating lamp usable on water as well as on land as claimed in claim 1 further comprising a water leakage-prevention ring interposed between the body and the joining member.

4. The mobile illuminating lamp usable on water as well as on land as claimed in claim 1 further comprising a water leakage-prevention ring interposed between the waterproof lamp cover and the joining member.

5. The mobile illuminating lamp usable on water as well as on land as claimed in claim 1, wherein the waterproof lamp cover has a front cover on a front end thereof, and a light reflecting screen is joined on an inner side of the front cover.
